## Europäisches Patentamt

## European Patent Office

## Office européen des brevets

(19)

(11) Publication number: **0 092 762**
**B1**

(12)

# EUROPEAN PATENT SPECIFICATION

(45) Date of publication of patent specification: **15.10.86**

(51) Int. Cl.⁴: **B 65 G 57/18**

(21) Application number: **83103725.4**

(22) Date of filing: **18.04.83**

(54) Method and apparatus for automatic stacking of extended articles.

(30) Priority: **28.04.82 NO 821402**

(43) Date of publication of application:
**02.11.83 Bulletin 83/44**

(45) Publication of the grant of the patent:
**15.10.86 Bulletin 86/42**

(84) Designated Contracting States:
**BE DE FR GB IT NL SE**

(56) References cited:
**DE-A-2 301 151**
**DE-A-2 720 504**
**DE-B-2 553 724**
**GB-A-2 073 695**
**US-A-4 043 459**

(73) Proprietor: **NORSK HYDRO A/S**
**Bygdoy Allé 2**
**N-0257 Oslo 2 (NO)**

(72) Inventor: **Clausen, Edvin**
**Kogsveien 10**
**DK-6270 Tonder (DK)**

(74) Representative: **Wilhelms, Rolf E., Dr. et al**
**WILHELMS, KILIAN & PARTNER Patentanwälte**
**Eduard-Schmid-Strasse 2**
**D-8000 München 90 (DE)**

Courier Press, Leamington Spa, England.

EP 0 092 762 B1

# Description

The present invention relates to a method for automatic stacking of elongated articles, especially extruded workpieces of aluminium or other metals, and also an apparatus to carry out the method of the type disclosed in the British Patent GB—A—2 073 695.

After seperation from the die extruded workpieces, e.g. of aluminium or Al-alloys, are immediately lifted from the run-out table over to a cooling table and thereafter transported by means of a crosstransfer walking beam conveyor and/or other conveying belts to a stretcher and further on to a saw for exact cutting of the stretched extruded workpieces. The extruded workpieces, after having been cut in predetermined lengths, are then piled on racks or containers for subsequent treatment and/or transport from the plants.

The extruded workpieces, which at this stage are unhardened, are especially sensitive to surface damages. Lifting beams, transport arms, run-out tables etc. are therefore coated with elastic coating, and moderate speeds are applied. It is still common practice to lay down the spacers between the layers of extruded workpieces manually during the stacking in order to ensure a gentle spacer laying without free fall and thereby danger of damages on the extruded workpieces.

The various known stacking and spacer laying machines applied in handling of timber have several drawbacks and cannot be applied to extruded metal profiles. The machines are located either over or next to the timber stacks and occupy a lot of space. Furthermore, there is no possibility of changing over to manual stacking when it is required, e.g. for tubular products, and these constructions are mainly based upon free fall of the spacers on wooden members.

One stacking apparatus based upon a portal bridge crane construction is known on the market. Also this construction is space-consuming, requires high capital costs, and the maximal length of the stacked extrusions is limited to 6—7 m.

GB 2 073 695 discloses another variant of the above described automatic stacking apparatus based upon several individually powered grip devices which carry out the spacer laying between the extruded workpieces. The sets of spacers, each bearing a group of workpieces, are moved concurrently by a transfer mechanism to a stacking station located above the container. The spacers are deposited on supports which can be lowered into the container or on groups of workpieces previously stacked on the supports. In addition to the already mentioned shortages of the portal bridge crane based construction, such as high capital costs and space requirement, synchronization of all individual grip devices gives low reliability of performance and high maintenance costs. Nor does this construction make manual spacer laying possible.

It is therefore the object of the present invention to provide a new method and an apparatus to carry out this method, which ensure automatic, reliable and gentle spacer laying, maintaining at the same time high performance corresponding to the capacity of the extrusion press.

Another object of the invention is to provide an apparatus with minimal space requirements, which can be integrated with the existing handling equipment attached to the extrusion press, and which also gives possibility for manual stacking of extruded workpieces.

This is achieved according to the invention, as it appears from the accompanying patent claims.

The invention will now be described in more detail and illustrated by means of the drawings, Figs. 1—3, where

Fig. 1 shows schematically the apparatus according to the invention in a vertical cross-section with a container and transportation means for the extruded workpieces

Fig. 2 is a cross-sectional view taken along the line I—I in Fig. 1

Fig. 3 shows schematically in more detail an apparatus with drive means for transport of spacer carriers.

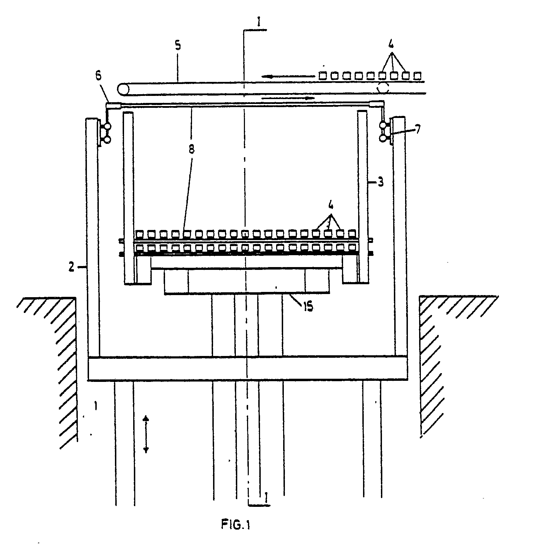

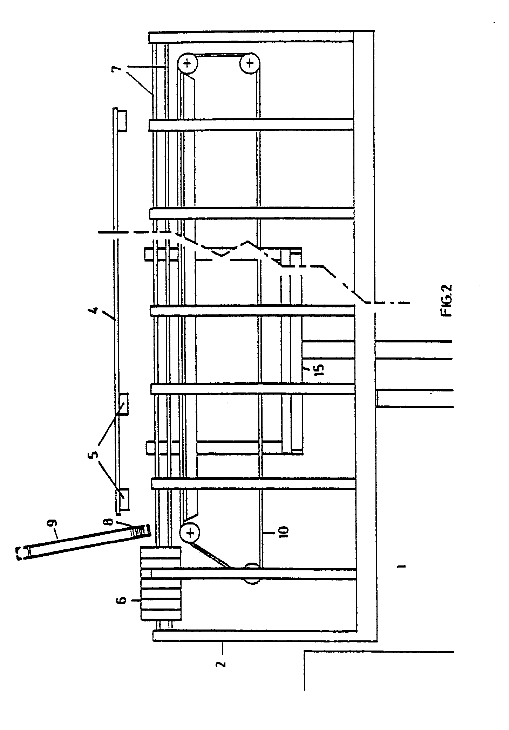

The apparatus, as shown in Figs. 1 and 2, is situated next to the run-out table from an extrusion press (not shown in the Figures) in a pit (1). The apparatus comprises a vertically ·mobile frame construction (2) surrounding a container (3) for stacking of extruded workpieces (4). The container (3) shown in the Figures rests on a rack (15) and is inserted in/removed from the apparatus by cranes, trucks or similar means, but also alternative constructions such as railway container cars can be used.

Transport means, shown in the Figures as conveyors (5), transfer extruded workpieces (4) from the run-out table over the container (3). Spacer carriers (6) grouped in pairs, which are moved along two parallel rails (7) fastened to the frame construction (2) in the longitudinal direction of the apparatus, ensure transfer of a certain number of spacers (8) under the conveyors (5) with the extruded workpieces (4).

Fig. 2 shows the apparatus in a cross-section taken along the longitudinal axis of the apparatus.

The spacer carriers (6) are by means of synchronized chains (10) pulled forward under the spacer magazine (9), which ensures an automatic release of the piled spacers (8).

A predetermined number of spacers are fed under the conveyors (5) with the extruded workpieces (4).

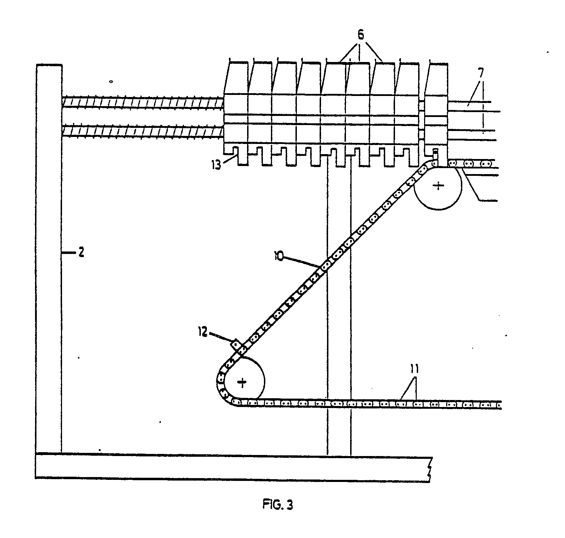

The special construction of the lock device for forwarding of spacer carriers is shown in more detail in Fig. 3. The spacer carriers (6) are transferred forward by means of chains (10) mounted parallel to the rails (7). Besides conventional links of the chain (10) the chain also comprises locking members (12) which, when passing under the stored spacer carriers, engage in a complementary formed recess part (13) in the spacer carriers and are in this manner locked during the forward transfer along the guiding rails (7).

The automatic spacer laying comprises the following steps:

1. When the apparatus is in starting position, it is lowered down to the pit (1) beneath the floor level, and the conveyors (5) are withdrawn under the run-out table from the extrusion press. The container (3) is placed on the rack (15).

2. By means of an electric steering device (not shown in the Figures) one predetermines the number of spacers to be placed discretely in a layer between the extrusions (4) and at the same time the distance between the spacers is chosen.

3. Conveyors with extruded workpieces (4) are moved over the container (3), and is simultaneously the spacer carriers (6) with the spacers (8) are transferred under the conveyors (5) by means of sychronized chains (10).

4. When all extruded workpieces are placed over the container, the mobile frame (2) is thereafter moved upwards so that the extruded workpieces (4) are lifted up from the conveyors (5) and are resting on the spacers (8).

5. The released conveyors are then drawn back under the run-out table, and the extruded workpieces are lowered at a variable speed down to the container (to begin with at a higher speed which is subsequently reduced when the extruded workpieces are approaching the bottom of the container or the last stacked extrusion layer).

6. When the spacers (8) with the extruded workpieces (4) reach the bottom or the last piled extrusion layer, the spacers are released from the spacer carriers (6), and these carriers are thereafter moved slightly backwards, raised and returned to starting position behind the spacer magazine.

7. A new cycle starts from step No. 3, and the whole operation is repeated until the container is full, the apparatus is lowered down to starting position and the container is removed from the rack (15).

Method for automatic stacking of extruded workpieces according to the invention and apparatus to carry out this method as described above have several distinct advantages compared to the present known devices. The whole apparatus can be completely withdrawn beneath floor level when the profile stacking of extruded workpieces is finished. This is an important feature with regard to modernization of present installations with limitation in existing transport system, e.g. cranes, railway cars etc.

Furthermore, the released area/space can be applied for possible manual stacking of extruded workpieces when it is required because of the shape of the profiles. This again represents a further saving of floor area which normally has to be reserved for such purposes.

Transfer of the spacer carriers with the spacers to lifting position under conveyors with extruded workpieces is done directly without need for complicated connecting links which are typical for the known stacking and spacer laying machines for handling of timber. This feature in combination with simple and robust chain drive mechanism for transport of the spacer carriers increases the reliability of the performance of the apparatus and reduces the maintenance costs.

## Claims

1. Method of automatically stacking a plurality of elongated articles (4), especially extruded work-pieces, in a container (3), using a transport device (5) for transferring the elongated articles (4) from a run-out table to the container (3) and means for introducing spacers (8) in a predetermined number and mutual distance under a group of articles (4), the common axis of alignment of the spacers (8) being normal to the common axis of alignment of the elongated articles (4), characterized in that:

(a) the transport device (5) loaded with a group of articles is extended over the container (3) while the spacers (8) are advanced over said container (3);

(b) the spacers (8) are moved upwards and lift a group of articles (4) from the transport device (5);

(c) the unloaded transport device (5) is withdrawn beneath said group of articles (4) and;

(d) thereafter the group of articles (4) resting on the spacers (8) is lowered down to the container (3).

2. Apparatus for automatically stacking a plurality of elongated articles (4), especially extruded work-pieces, according to the method of Claim 1, comprising a plurality of spacer carriers (6), a magazine (9) of spacers (8) and transfer means (10) for transferring pairs of carriers (6) with spacers (8) over the container (3), characterized in that the spacer carriers (6) with the spacers (8) constitute the means for introducing spacers (8) under a group of articles (4), lifting the group from the transport device (5) and lowering down the group with said spacers (8) to the container (3).

3. Apparatus according to claim 2, characterized in that the transfer means (10) comprises two or more synchronized chains (10).

4. Apparatus according to claim 2 or 3, characterized in that the spacer carriers (6) are moved along two parallel guiding rails (7) fastened to a mobile frame construction (2) which can be completely withdrawn down beneath floor level in a pit (1).

## Patentansprüche

1. Verfahren zum automatischen Stapeln einer Vielzahl von langgestreckten Gegenständen (4), insbesondere extrudierten Werkstücken, in einen Container (3), wobei eine Transportvorrichtung (5) zur Überführung der langgestreckten Gegenständen (4) von einem Auslaufrollgang zum Container (3) und Mittel zur Einführung von Abstandshaltern (8) in vorbestimmter Anzahl und vorbestimmten Abstand unter einer Gruppe von Gegenständen (4) verwendet wird, wobei die Achse der Ausrichtung der Abstandshalter (8) der Ausrichtungsachse der langgestreckten (4) entspricht, dadurch gekennzeichnet, daß:

a) die Transportvorrichtung (5), die mit einer Gruppe von Gegenständen beladen ist, über den Container (4) ragt, während die Abstandshalter (8) über den Container (3) geschoben werden;

b) die Abstandshalter (8) aufwärts bewegt und eine Gruppe von Gegenständen (4) von der Transportvorrichtung (5) anheben;

c) die entladene Transportvorrichtung (5) unter den Gruppen von Gegenständen (4) fortgezogen wird und;

d) dann die Gruppe von Gegenständen (4) auf den Abstandshalter (8) auf den Container (3) herabgelassen wird.

2. Vorrichtung zum automatischen Stapeln von einer Vielzahl von langgesteckten Gegenständen (4), insbesondere extrudierten Werkstücken gemäß Verfahren nach Anspruch 1, mit einer Vielzahl von Abstandshalterträgern (6), einem Magazin (9) für Abstandshalter (8) und Überführungsmittel (10) zur Überführung von Paaren von Trägern (6) mit Abstandshaltern (8) über den Container (3), dadurch gekennzeichnet, daß die Abstandshalterträger (6) mit den Abstandshaltern (8) das Mittel zur Einführung der Abstandshalter (8) unter eine Gruppe von Gegenständen (4) bilden, anheben der Gruppe von der Transportvorrichtung (5) und Absetzen der Gruppe mit den Abstandshaltern (8) auf den Containern (3).

3. Vorrichtung nach Anspruch 2, dadurch gekennzeichnet, daß das Überführungsmittel (10) zwei oder mehr synchronisierte Ketten (10) aufweist.

4. Vorrichtung nach Anspruch 2 oder 3, dadurch gekennzeichnet, daß die Abstandshalterträger (6) entlang zwei parallelen Leitschienen (7), die an einer mobilen Rahmenkonstruktion (2), die vollständig in eine Ausnehmung (1) unterhalb der Bodenebene eingezogen werden kann, bewegt werden.

**Revendications**

1. Procédé d'empilage automatique d'une série d'articles allongés (4), en particulier des pièces extrudées, dans un conteneur (3) utilisant un dispositif de transport (5) pour transférer les articles allongés (4) d'une table de sortie vers le conteneur (3) et des moyens d'introduction en nombre prédéterminé et à une distance mutuelle prédéterminée de cales (8) sous un groupe d'articles (4), l'axe commun d'alignement des cales (8) étant perpendiculaire à l'axe commun d'alignement des articles allongés (4), caractérisé en ce que:

(a) le dispositif de transport (5) chargé d'un groupe d'articles est placé au-dessus du conteneur (3) tandis que les cales (8) sont avancées au-dessus du conteneur (3);

(b) les cales (8) sont déplacées vers le haut et soulèvent un groupe d'articles (4) du dispositif de transport (5);

(c) le dispositif de transport (5) déchargé est retiré de dessous le groupe d'articles (4); et

(d) ensuite, le groupe d'articles (4) reposant sur les cales (8) est descendu vers le conteneur (3).

2. Appareil d'empilage automatique d'une série d'articles allongés (4), en particulier de pièces extrudées selon la revendication 1, comportant une série de supports (6) de cales, un magasin de cales (8) et des moyens de transport (10) pour transférer des paires de supports (6) avec des cales (8) au-dessus du conteneur (3), caractérisé en ce que les supports (6) de cales (8) constituent les moyens servant à introduire les cales (8) sous un groupe d'articles (4), à soulever le groupe du dispositif de transport (5) et à descendre le groupe avec les cales (8) vers le conteneur (3).

3. Appareil selon la revendication 2, caractérisé en ce que les moyens de transfert (10) comportent deux ou plus chaînes synchronisées.

4. Appareil selon l'une quelconque des revendications 2 ou 3 caractérisé en ce que les supports (6) de cales sont déplacés le long de deux rails de guidage (7) parallèles fixés à un chassis mobile (2) qui peut être ramené en totalité en dessous du niveau du sol dans une fosse (1).

FIG.1

FIG.2

FIG. 3